# EUROPEAN PATENT APPLICATION

(11) **EP 4 144 570 A1**
(43) Date of publication of application: **08.03.2023**
(21) Application number: 21803693.7
(22) Date of filing: 08.05.2021
(51) Int. Cl.: B60L 53/00

(54) **CHARGING METHOD AND APPARATUS**

(30) Priority: 11.05.2020 CN 202010391479
(71) Applicant: Great Wall Motor Company Limited, Baoding, Hebei 071000 (CN)
(72) Inventor: ZHOU, Mingwang, Baoding City, Hebei 071000 (CN); WU, Maiqing, Baoding City, Hebei 071000 (CN)
(74) Representative: Klunker IP Patentanwälte PartG mbB
(86) International application number: PCT/CN2021/092412
(87) International publication number: WO 2021/227991

(57) **Abstract**

A charging method and apparatus, wherein the method is applied to an electric vehicle, the electric vehicle includes a power battery and a fuel cell that are connected, and the method includes: when a function of idle charging of the fuel cell is started up, detecting a first power-battery electric quantity of the power battery every preset duration; calculating a second power-battery electric quantity that is required to start up the fuel cell; and when the first power-battery electric quantity and the second power-battery electric quantity satisfy a predetermined condition, charging the power battery. The present disclosure may enable the power battery to be charged when the predetermined condition is satisfied, to ensure that feeding of the power battery does not happen due to long-time placement of the power vehicle, which ensures the usage reliability of the power vehicle.

## Description

### CROSS REFERENCE TO RELEVANT APPLICATIONS

The present disclosure claims the priority of the Chinese patent application filed on May 11, 2020 before the China Patent Office with the application number of 202010391479.1 and the title of "CHARGING METHOD AND APPARATUS", which is incorporated herein in its entirety by reference.

### TECHNICAL FIELD

The present disclosure relates to the technical field of vehicle controlling and, more particularly, to a charging method and an apparatus.

### BACKGROUND

With the gradual development in the technical field of vehicle controlling, hydrogen-fuel-cell electric vehicles are becoming more and more common as a new means of transportation, and hydrogen-fuel-cell electric vehicles are having a continuously increased level of popularization.

Energy saving, emission reduction and development of the new energy vehicles have become the consensus in the automotive field. The fuels of hydrogen-fuel-cell electric vehicles are mainly from hydrogen. Hydrogen-fuel-cell electric vehicles include a fuel cell and a power battery. The fuel cell, after the vehicle has started up, requires time to complete the starting-up, and then can output the power. Therefore, before the starting-up of the vehicle, the main power output source and the energy for starting up the fuel cell are mainly from the electric energy in the power battery.

However, when the electric vehicle overuses the power battery or the electric vehicle is idled and not used for a long time, electric-quantity losing happens due to self-discharging and so on, which results in decreasing of the power-battery electric quantity. When the user is using the vehicle next time, the vehicle might be unable to start up, which affects the usage of the vehicle by the user, and might even result in feeding damaging of the power battery.

### SUMMARY

In view of the above, the present disclosure provides a charging method and an apparatus, to solve the problem that an excessively low power-battery electric quantity caused by long-term parking of an electric vehicle or overuse of a power battery results in that the vehicle cannot travel, and might cause feeding damaging of the power battery.

In order to achieve the above object, the technical solutions of the present disclosure are realized as follows:
In the first aspect, an embodiment of the present disclosure provides a charging method, wherein the method is applied to an electric vehicle, the electric vehicle includes a power battery and a fuel cell that are connected, and the method includes:
when a function of idle charging of the fuel cell is started up, detecting a first power-battery electric quantity of the power battery every preset duration;
calculating a second power-battery electric quantity that is required to start up the fuel cell; and
when the first power-battery electric quantity and the second power-battery electric quantity satisfy a predetermined condition, charging the power battery.

Optionally, the step of, when the first power-battery electric quantity and the second power-battery electric quantity satisfy the predetermined condition, charging the power battery includes:
when the first power-battery electric quantity is less than an electric-quantity sum value, charging the power battery, wherein the electric-quantity sum value refers to a sum value of the second power-battery electric quantity and a first preset battery-electric-quantity threshold that corresponds to the power battery.

Optionally, the step of, when the first power-battery electric quantity is less than the electric-quantity sum value, charging the power battery includes:
when the first power-battery electric quantity is less than the electric-quantity sum value, starting up the fuel cell; and
based on energy generated by reaction of the fuel cell, charging the power battery.

Optionally, after the step of charging the power battery, the method further includes:
when the first power-battery electric quantity is greater than or equal to the electric-quantity sum value, controlling the electric vehicle to be in a sleeping state.

Optionally, after the step of charging the power battery, the method further includes:
when the first power-battery electric quantity is greater than a second preset battery-electric-quantity threshold, stopping charging the power battery.

In the second aspect, an embodiment of the present disclosure provides a charging apparatus, wherein the apparatus is applied to an electric vehicle, the electric vehicle includes a power battery and a fuel cell that are connected, and the apparatus includes:
a detecting module configured for, when a function of idle charging of the fuel cell is started up, detecting a first power-battery electric quantity of the power battery every preset duration;
a calculating module configured for calculating a second power-battery electric quantity that is required to start up the fuel cell; and
a first charging module configured for, when the first power-battery electric quantity and the second power-battery electric quantity satisfy a predetermined condition, charging the power battery.

Optionally, the first charging module includes:
a charging submodule configured for, when the first power-battery electric quantity is less than an electric-quantity sum value, charging the power battery, wherein the electric-quantity sum value refers to a sum value of the second power-battery electric quantity and a first preset battery-electric-quantity threshold that corresponds to the power battery.

Optionally, the charging submodule includes:
a starting-up unit configured for, when the first power-battery electric quantity is less than the electric-quantity sum value, starting up the fuel cell; and
a charging unit configured for, based on energy generated by reaction of the fuel cell, charging the power battery.

Optionally, the apparatus further includes:
a second charging module configured for, when the first power-battery electric quantity is greater than or equal to the electric-quantity sum value, controlling the electric vehicle to be in a sleeping state.

Optionally, the apparatus further includes:
a third charging module configured for, when the first power-battery electric quantity is greater than a second preset battery-electric-quantity threshold, stopping charging the power battery.

As compared with the prior art, the embodiments of the present disclosure have the following advantages:
In the charging method according to the embodiments of the present disclosure, the power vehicle may, when a function of idle charging of the fuel cell is started up, detect a first power-battery electric quantity of the power battery every preset duration; calculate a second power-battery electric quantity that is required to start up the fuel cell; and when the first power-battery electric quantity and the second power-battery electric quantity satisfy a predetermined condition, charge the power battery. The present disclosure can enable the power battery to be charged when the predetermined condition is satisfied, to ensure that feeding of the power battery does not happen due to long-time placement of the power vehicle, which ensures the usage reliability of the power vehicle.

The above description is merely a summary of the technical solutions of the present disclosure. In order to more clearly know the elements of the present disclosure to enable the implementation according to the contents of the description, and in order to make the above and other purposes, features and advantages of the present disclosure more apparent and understandable, the particular embodiments of the present disclosure are provided below.

### BRIEF DESCRIPTION OF THE DRAWINGS

In order to more clearly illustrate the technical solutions of the embodiments of the present disclosure or the related art, the figures that are required to describe the embodiments or the related art will be briefly introduced below. Apparently, the figures that are described below are embodiments of the present disclosure, and a person skilled in the art can obtain other figures according to these figures without paying creative work.

The drawings, which form part of the present disclosure, are intended to provide a further understanding of the present disclosure. The illustrative embodiments of the present disclosure and their explanation are intended to interpret the present disclosure, and do not inappropriately limit the present disclosure. In the drawings:
FIG. 1 shows a flow chart of the steps of the charging method according to the first embodiment of the present disclosure;
FIG. 2 shows a schematic flow chart of the charging of the electric vehicle according to an embodiment of the present disclosure;
FIG. 3 shows a flow chart of the steps of the charging method according to the second embodiment of the present disclosure;
FIG. 4 shows a schematic structural diagram of the charging apparatus according to the third embodiment of the present disclosure;
FIG. 5 schematically shows a block diagram of a computing and processing device for implementing the method according to the present disclosure; and
FIG. 6 schematically shows a storage unit for maintaining or carrying a program code for implementing the method according to the present disclosure.

### DETAILED DESCRIPTION

In order to make the objects, the technical solutions and the advantages of the embodiments of the present disclosure clearer, the technical solutions of the embodiments of the present disclosure will be clearly and completely described below with reference to the drawings of the embodiments of the present disclosure. Apparently, the described embodiments are merely certain embodiments of the present disclosure, rather than all of the embodiments. All of the other embodiments that a person skilled in the art obtains on the basis of the embodiments of the present disclosure without paying creative work fall within the protection scope of the present disclosure.

It should be noted that, subject to the avoiding of any conflict, the embodiments and the features of the embodiments of the present disclosure may be combined.

The present disclosure will be described in detail below with reference to the drawings and the embodiments.

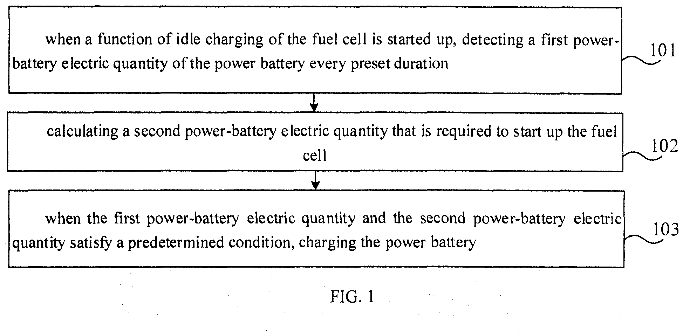

Referring to FIG. 1, FIG. 1 shows a flow chart of the steps of the charging method according to the first embodiment of the present disclosure. The charging method may be applied to an electric vehicle, wherein the electric vehicle includes a power battery and a fuel cell that are connected.

As shown in FIG. 1, the charging method may particularly include the following steps:
Step 101: when a function of idle charging of the fuel cell is started up, detecting a first power-battery electric quantity of the power battery every preset duration.

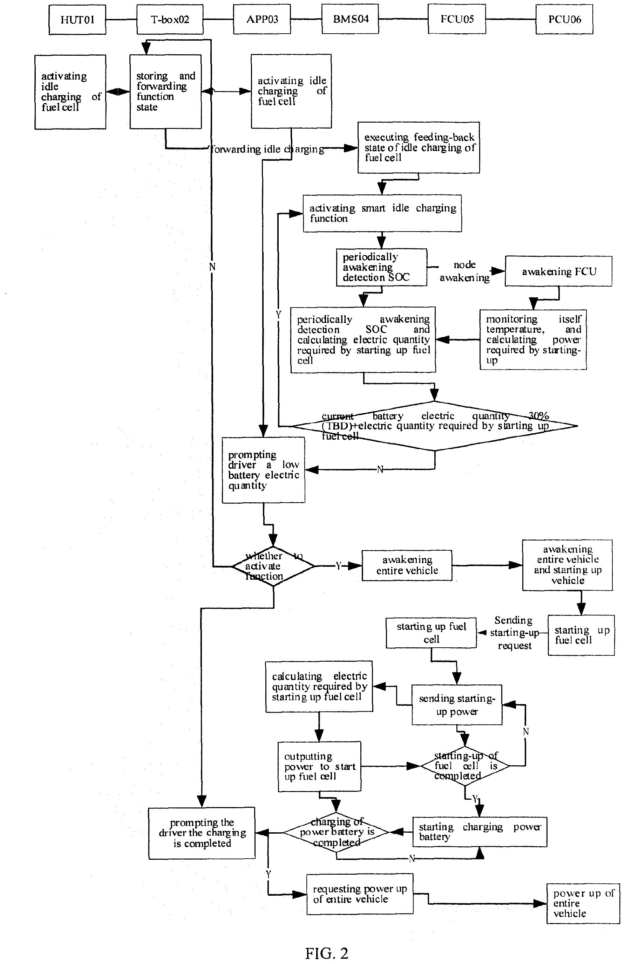

FIG. 2 shows a schematic flow chart of the charging of the electric vehicle according to an embodiment of the present disclosure. As shown in FIG. 2, the electric vehicle may include an on-board mainframe (HUT) 01, a remote message processing box (Telematics BOX, T-BOX) 02, an application program (Application, APP) 03, a battery controlling unit (Battery Management System, BMS) 04, a fuel-cell controlling unit (Fuel cell Control Unit, FCU) 05 and an entire-vehicle controlling unit (Power Control Unit, PCU) 06 that are sequentially connected. The driver may activate the idle charging function of the fuel cell by using the on-board mainframe 01 or the application program 03 at the mobile side. When the driver sets by using the on-board mainframe 01 or the application program 03 at the mobile side, the on-board mainframe 01 or the application program 03 at the mobile side may forward the switching state of the idle charging function of the fuel cell to the BMS 04 by using the T-BOX 02. The BMS 04 may determine whether the current electric quantity of the power battery requires executing the idle charging function, and feed back the result to the T-BOX 02. When it can be executed, the on-board mainframe 01 or the application program 03 at the mobile side performs synchronous idle charging into the starting-up state, and displays that the idle charging may be performed, and the T-BOX 02 may store the starting-up state and send the starting-up state via a Telematics Service Provider (TSP) to the on-board mainframe 01 or the application program 03 at the mobile side for updating the displaying at a same time. At this point, the setting of the idle charging function of the fuel cell is completed.

After the setting of the idle charging function of the fuel cell is completed, the BMS 04 may detect the first power-battery electric quantity of the power battery every preset duration. The preset duration may be one hour, and may also be 0.5 hours, which may be correspondingly regulated according to particular practical applications, and is not limited in the embodiments of the present disclosure. After the step of, when the function of idle charging of the fuel cell is started up, detecting the first power-battery electric quantity of the power battery every preset duration, the step 102 is executed.

Step 102: calculating a second power-battery electric quantity that is required to start up the fuel cell.

In the present disclosure, referring to FIG. 2, the fuel-cell controlling unit 05 may be awakened by using a node, the temperature of the fuel-cell controlling unit 05 itself is detected, and a second power-battery electric quantity that is required to start up the fuel cell is calculated.

The battery controlling unit is awakened by using a node, to calculate the second power-battery electric quantity, in which step it is not required to awaken the entire vehicle, which reduces the consumption of the electric quantity caused by frequent power up and down of the vehicle, and prolongs the service lives of the component parts of the power systems.

After the step of calculating the second power-battery electric quantity that is required to start up the fuel cell, the step 103 is executed.

Step 103: when the first power-battery electric quantity and the second power-battery electric quantity satisfy a predetermined condition, charging the power battery.

In the present disclosure, when the first power-battery electric quantity is less than the sum value of the second power-battery electric quantity and the first preset battery-electric-quantity threshold of the power battery, the BMS 04 sends a request of starting up the idle charging function to the PCU 06. At which point, the PCU 06 awakens the entire vehicle, and charging the power battery.

In the charging method according to the embodiments of the present disclosure, the power vehicle may, when a function of idle charging of the fuel cell is started up, detect a first power-battery electric quantity of the power battery every preset duration; calculate a second power-battery electric quantity that is required to start up the fuel cell; and when the first power-battery electric quantity and the second power-battery electric quantity satisfy a predetermined condition, charge the power battery. The present disclosure can enable the power battery to be charged when the predetermined condition is satisfied, to ensure that feeding of the power battery does not happen due to long-time placement of the power vehicle, which ensures the usage reliability of the power vehicle.

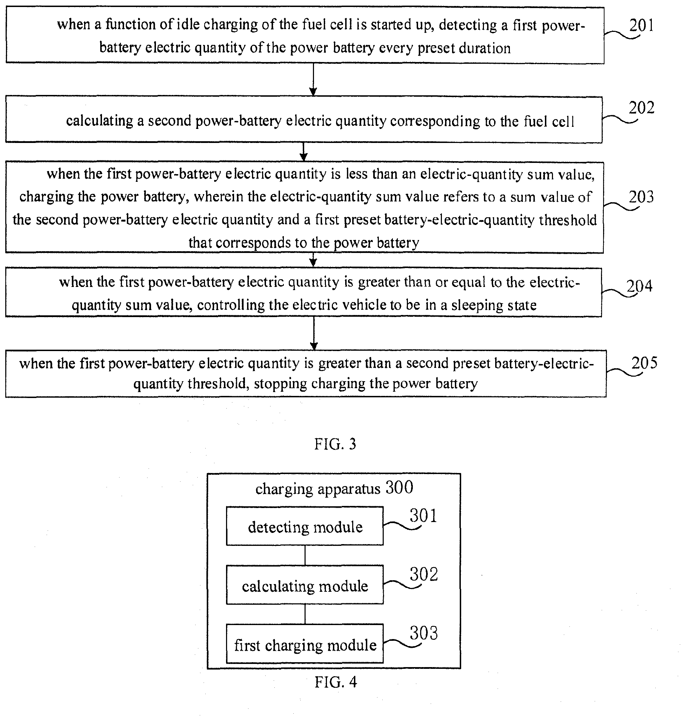

Referring to FIG. 3, FIG. 3 shows a flow chart of the steps of the charging method according to the second embodiment of the present disclosure. The charging method may be applied to an electric vehicle, wherein the electric vehicle includes a power battery and a fuel cell that are connected.

As shown in FIG. 3, the charging method may particularly include the following steps:
Step 201: when a function of idle charging of the fuel cell is started up, detecting a first power-battery electric quantity of the power battery every preset duration.

FIG. 2 shows a schematic flow chart of the charging of the electric vehicle according to an embodiment of the present disclosure. As shown in FIG. 2, the electric vehicle may include an on-board mainframe (HUT) 01, a wireless gateway (T-BOX) 02, an application program (APP) 03, a battery controlling unit (BMS) 04, a fuel-cell controlling unit (FCU) 05 and an entire-vehicle controlling unit (PCU) 06 that are sequentially connected. The driver may activate the idle charging function of the fuel cell by using the on-board mainframe 01 or the application program 03 at the mobile side. When the driver sets by using the on-board mainframe 01 or the application program 03 at the mobile side, the on-board mainframe 01 or the application program 03 at the mobile side may forward the switching state of the idle charging function of the fuel cell to the BMS 04 by using the T-BOX 02. The BMS 04 may determine whether the current electric quantity of the power battery requires executing the idle charging function, and feed back the result to the T-BOX 02. When it can be executed, the on-board mainframe 01 or the application program 03 at the mobile side performs synchronous idle charging into the starting-up state, and displays that the idle charging may be performed, and the T-BOX 02 may store the starting-up state and send the starting-up state via a Telematics Service Provider (TSP) to the on-board mainframe 01 or the application program 03 at the mobile side for updating the displaying at a same time. At this point, the setting of the idle charging function of the fuel cell is completed.

After the setting of the idle charging function of the fuel cell is completed, the BMS 04 may detect the first power-battery electric quantity of the power battery every preset duration. The preset duration may be one hour, and may also be 0.5 hours, which may be correspondingly regulated according to particular practical applications, and is not limited in the embodiments of the present disclosure. After the step of, when the function of idle charging of the fuel cell is started up, detecting the first power-battery electric quantity of the power battery every preset duration, the step 202 is executed.

Step 202: calculating a second power-battery electric quantity that is required to start up the fuel cell.

In the present disclosure, referring to FIG. 2, the fuel-cell controlling unit 05 may be awakened by using a node, the temperature of the fuel-cell controlling unit 05 itself is detected, and a second power-battery electric quantity that is required to start up the fuel cell is calculated.

Referring to FIG. 2, the battery controlling unit is awakened by using a node, to calculate the second power-battery electric quantity, in which step it is not required to awaken the entire vehicle, which reduces the consumption of the electric quantity caused by frequent power up and down of the vehicle, and prolongs the service lives of the component parts of the power systems.

After the step of calculating the second power-battery electric quantity that is required to start up the fuel cell, the step 203 is executed.

Step 203: when the first power-battery electric quantity is less than an electric-quantity sum value, charging the power battery, wherein the electric-quantity sum value refers to a sum value of the second power-battery electric quantity and a first preset battery-electric-quantity threshold that corresponds to the power battery.

In the present disclosure, referring to FIG. 2, when the first power-battery electric quantity is less than the sum value of the second power-battery electric quantity and the first preset battery-electric-quantity threshold of the power battery, the BMS 04 sends a request of starting up the idle charging function to the PCU 06. At which point, the PCU 06 awakens the entire vehicle, and charges the power battery.

Particularly, when the first power-battery electric quantity is less than the sum value of the second power-battery electric quantity and the first preset battery-electric-quantity threshold of the power battery, the BMS 04 sends a request of starting up the idle charging function to the PCU 06. At which point, the PCU 06 awakens the entire vehicle, and based on the energy generated by the reaction of the fuel cell, charges the power battery.

After the step of, when the first power-battery electric quantity is less than the electric-quantity sum value, charging the power battery, wherein the electric-quantity sum value refers to the sum value of the second power-battery electric quantity and the first preset battery-electric-quantity threshold that corresponds to the power battery, the step 204 is executed.

Step 204: when the first power-battery electric quantity is greater than or equal to the electric-quantity sum value, controlling the electric vehicle to be in a sleeping state.

In the present disclosure, when the first power-battery electric quantity is greater than or equal to the sum value of the second power-battery electric quantity and the first preset battery-electric-quantity threshold of the power battery, the BMS 04 controls the electric vehicle to be in a sleeping state, and detects the first power-battery electric quantity of the power battery every preset duration.

After the step of, when the first power-battery electric quantity is greater than or equal to the electric-quantity sum value, controlling the electric vehicle to be in the sleeping state, the step 205 is executed.

Step 205: when the first power-battery electric quantity is greater than a second preset battery-electric-quantity threshold, stopping charging the power battery.

In the present disclosure, when the first power-battery electric quantity is greater than a second preset battery-electric-quantity threshold, the BMS 04 controls the electric vehicle to stop the idle charging function, and, by using the APP, prompts the driver that the idle charging of the fuel cell is completed and executing a power down process.

The second preset battery-electric-quantity threshold may be 90%, and may also be a 91%. That electric-quantity threshold is the threshold of the completion of the charging of the power battery, which may be correspondingly regulated according to practical demands, and is not limited in the embodiments of the present disclosure.

In the charging method according to the embodiments of the present disclosure, the power vehicle can, when a function of idle charging of the fuel cell is started up, detect a first power-battery electric quantity of the power battery every preset duration; calculate a second power-battery electric quantity that is required to start up the fuel cell; when the first power-battery electric quantity is less than an electric-quantity sum value, charge the power battery; when the first power-battery electric quantity is greater than or equal to the electric-quantity sum value, control the electric vehicle to be in a sleeping state; and when the first power-battery electric quantity is greater than a second preset battery-electric-quantity threshold, stop charging the power battery. The present disclosure can enable the power battery to be charged when the predetermined condition is satisfied, to ensure that feeding of the power battery does not happen due to long-time idling of the power vehicle, which ensures the usage reliability of the power vehicle.

Referring to FIG. 4, FIG. 4 shows a schematic structural diagram of the charging apparatus according to the third embodiment of the present disclosure. The charging apparatus may be applied to an electric vehicle, wherein the electric vehicle includes a power battery and a fuel cell that are connected.

As shown in FIG. 4, the charging apparatus 300 may particularly include:
a detecting module 301 configured for, when a function of idle charging of the fuel cell is started up, detecting a first power-battery electric quantity of the power battery every preset duration;
a calculating module 302 configured for calculating a second power-battery electric quantity that is required to start up the fuel cell; and
a first charging module 303 configured for, when the first power-battery electric quantity and the second power-battery electric quantity satisfy a predetermined condition, charging the power battery.

Optionally, the first charging module includes:
a charging submodule configured for, when the first power-battery electric quantity is less than an electric-quantity sum value, charging the power battery, wherein the electric-quantity sum value refers to a sum value of the second power-battery electric quantity and a first preset battery-electric-quantity threshold that corresponds to the power battery.

Optionally, the charging submodule includes:
a starting-up unit configured for, when the first power-battery electric quantity is less than the electric-quantity sum value, starting up the fuel cell; and
a charging unit configured for, based on energy generated by reaction of the fuel cell, charging the power battery.

Optionally, the apparatus further includes:
a second charging module configured for, when the first power-battery electric quantity is greater than or equal to the electric-quantity sum value, controlling the electric vehicle to be in a sleeping state.

Optionally, the apparatus further includes:
a third charging module configured for, when the first power-battery electric quantity is greater than a second preset battery-electric-quantity threshold, stopping charging the power battery.

The particular implementations of the charging apparatus according to the embodiments of the present disclosure have already been described in detail in the process section, and are not discussed herein further.

In the charging method according to the embodiments of the present disclosure, the power vehicle can, by using the detecting module, when a function of idle charging of the fuel cell is started up, detect a first power-battery electric quantity of the power battery every preset duration; subsequently, by using the calculating module, calculate a second power-battery electric quantity that is required to start up the fuel cell; and finally, by using the first charging module, when the first power-battery electric quantity and the second power-battery electric quantity satisfy a predetermined condition, charge the power battery. The present disclosure can enable the power battery to be charged when the predetermined condition is satisfied, to ensure that feeding of the power battery does not happen due to long-time placement of the power vehicle, which ensures the usage reliability of the power vehicle.

The above-described device embodiments are merely illustrative, wherein the units that are described as separate components may or may not be physically separate, and the components that are displayed as units may or may not be physical units; in other words, they may be located at the same one location, and may also be distributed to a plurality of network units. Some or all of the modules may be selected according to the actual demands to realize the purposes of the solutions of the embodiments. A person skilled in the art can understand and implement the technical solutions without paying creative work.

Each component embodiment of the present disclosure may be implemented by hardware, or by software modules that are operated on one or more processors, or by a combination thereof. A person skilled in the art should understand that some or all of the functions of some or all of the components of the computing and processing device according to the embodiments of the present disclosure may be implemented by using a microprocessor or a digital signal processor (DSP) in practice. The present disclosure may also be implemented as apparatus or device programs (for example, computer programs and computer program products) for implementing part of or the whole of the method described herein. Such programs for implementing the present disclosure may be stored in a computer-readable medium, or may be in the form of one or more signals. Such signals may be downloaded from an Internet website, or provided on a carrier signal, or provided in any other forms.

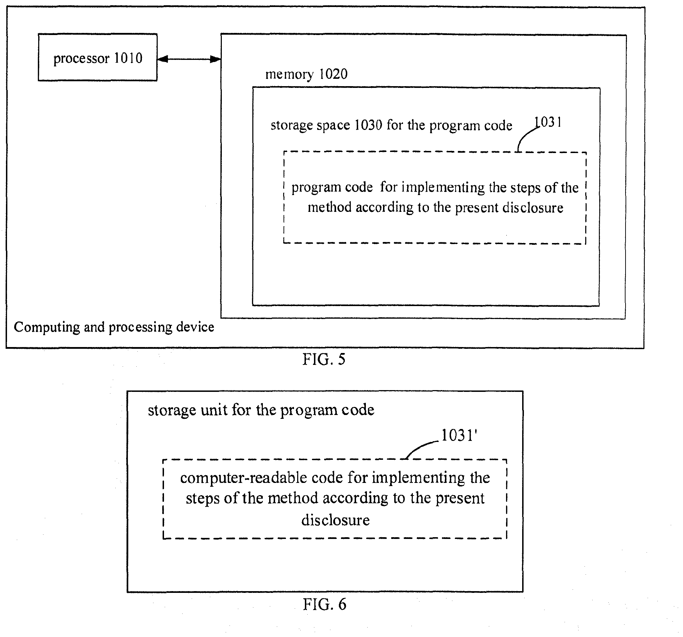

For example, FIG. 5 shows a computing and processing device that can implement the method according to the present disclosure. The computing and processing device traditionally includes a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 6. The storage unit may have storage segments or storage spaces with similar arrangement to the memory 1020 of the computing and processing device in FIG. 5. The program codes may, for example, be compressed in a suitable form. Generally, the storage unit contains a computer-readable code 1031', which can be read by a processor like 1010. When those codes are executed by the computing and processing device, the codes cause the computing and processing device to implement each of the steps of the method described above.

The "one embodiment", "an embodiment" or "one or more embodiments" as used herein means that particular features, structures or characteristics described with reference to an embodiment are included in at least one embodiment of the present disclosure. Moreover, it should be noted that here an example using the wording "in an embodiment" does not necessarily refer to the same one embodiment.

The description provided herein describes many concrete details. However, it can be understood that the embodiments of the present disclosure may be implemented without those concrete details. In some of the embodiments, well-known processes, structures and techniques are not described in detail, so as not to affect the understanding of the description.

In the claims, any reference signs between parentheses should not be construed as limiting the claims. The word "comprise" does not exclude elements or steps that are not listed in the claims. The word "a" or "an" preceding an element does not exclude the existing of a plurality of such elements. The present disclosure may be implemented by means of hardware comprising several different elements and by means of a properly programmed computer. In unit claims that list several devices, some of those devices may be embodied by the same item of hardware. The words first, second, third and so on do not denote any order. Those words may be interpreted as names.

Finally, it should be noted that the above embodiments are merely intended to explain the technical solutions of the present disclosure, and not to limit them. Although the present disclosure is explained in detail with reference to the above embodiments, a person skilled in the art should understand that he can still modify the technical solutions set forth by the above embodiments, or make equivalent substitutions to part of the technical features of them. However, those modifications or substitutions do not make the essence of the corresponding technical solutions depart from the spirit and scope of the technical solutions of the embodiments of the present disclosure.

## Claims

1. A charging method, wherein the method is applied to an electric vehicle, the electric vehicle comprises a power battery and a fuel cell that are connected, and the method comprises:
when a function of idle charging of the fuel cell is started up, detecting a first power-battery electric quantity of the power battery every preset duration;
calculating a second power-battery electric quantity that is required to start up the fuel cell; and
when the first power-battery electric quantity and the second power-battery electric quantity satisfy a predetermined condition, charging the power battery.

2. The method according to claim 1, wherein the step of, when the first power-battery electric quantity and the second power-battery electric quantity satisfy the predetermined condition, charging the power battery comprises:
when the first power-battery electric quantity is less than an electric-quantity sum value, charging the power battery, wherein the electric-quantity sum value refers to a sum value of the second power-battery electric quantity and a first preset battery-electric-quantity threshold that corresponds to the power battery.

3. The method according to claim 2, wherein the step of, when the first power-battery electric quantity is less than the electric-quantity sum value, charging the power battery comprises:
when the first power-battery electric quantity is less than the electric-quantity sum value, starting up the fuel cell; and
based on energy generated by reaction of the fuel cell, charging the power battery.

4. The method according to claim 2 or 3, wherein after the step of charging the power battery, the method further comprises:
when the first power-battery electric quantity is greater than or equal to the electric-quantity sum value, controlling the electric vehicle to be in a sleeping state.

5. The method according to any one of claims 1-4, wherein after the step of charging the power battery, the method further comprises:
when the first power-battery electric quantity is greater than a second preset battery-electric-quantity threshold, stopping charging the power battery.

6. The method according to claim 5, wherein after the step of, when the first power-battery electric quantity is greater than the second preset battery-electric-quantity threshold, stopping charging the power battery, the method further comprises:
prompting a driver that the idle charging of the fuel cell is completed, and executing a power down process.

7. A charging apparatus, wherein the apparatus is applied to an electric vehicle, the electric vehicle comprises a power battery and a fuel cell that are connected, and the apparatus comprises:
a detecting module configured for, when a function of idle charging of the fuel cell is started up, detecting a first power-battery electric quantity of the power battery every preset duration;
a calculating module configured for calculating a second power-battery electric quantity that is required to start up the fuel cell; and
a first charging module configured for, when the first power-battery electric quantity and the second power-battery electric quantity satisfy a predetermined condition, charging the power battery.

8. The apparatus according to claim 7, wherein the first charging module comprises:
a charging submodule configured for, when the first power-battery electric quantity is less than an electric-quantity sum value, charging the power battery, wherein the electric-quantity sum value refers to a sum value of the second power-battery electric quantity and a first preset battery-electric-quantity threshold that corresponds to the power battery.

9. The apparatus according to claim 8, wherein the charging submodule comprises:
a starting-up unit configured for, when the first power-battery electric quantity is less than the electric-quantity sum value, starting up the fuel cell; and
a charging unit configured for, based on energy generated by reaction of the fuel cell, charging the power battery.

10. The apparatus according to claim 8 or 9, wherein the apparatus further comprises:
a second charging module configured for, when the first power-battery electric quantity is greater than or equal to the electric-quantity sum value, controlling the electric vehicle to be in a sleeping state.

11. The apparatus according to any one of claims 7 to 10, wherein the apparatus further comprises:
a third charging module configured for, when the first power-battery electric quantity is greater than a second preset battery-electric-quantity threshold, stopping charging the power battery.

12. A vehicle, wherein the vehicle comprises the charging apparatus according to any one of claims 7-11.

13. A computing and processing device, wherein the computing and processing device comprises:
a memory storing a computer-readable code; and
one or more processors, wherein when the computer-readable code is executed by the one or more processors, the computing and processing device implements the charging method according to any one of claims 1-6.

14. A computer program, wherein the computer program comprises a computer-readable code, and when the computer-readable code is executed in a computing and processing device, the computer-readable code causes the computing and processing device to implement the charging method according to any one of claims 1-6.

15. A computer-readable medium, wherein the computer-readable medium stores the computer program according to claim 14.
